# EUROPÄISCHE PATENTSCHRIFT

(11) **EP 0 451 459 B1**
(45) Veröffentlichungstag und Bekanntmachung des Hinweises auf die Patenterteilung: **25.05.1994**
(21) Anmeldenummer: 91101965.1
(22) Anmeldetag: 13.02.1991
(51) Int. Cl.: F16L 3/04, F16B 19/00

(54) **Rohrbügel**
Pipe clamp
Bride de fixation pour tuyau

(30) Priorität: 12.04.1990 DE 9004269 U
(43) Veröffentlichungstag der Anmeldung: 16.10.1991
(73) Patentinhaber: fischerwerke Artur Fischer GmbH & Co. KG, D-72178 Waldachtal (DE)
(72) Erfinder: Schulte, Helmut, W-5880 Lüdenscheid (DE)

(56) Entgegenhaltungen:
- DE-A- 1 909 970
- DE-U- 1 788 075
- GB-A- 856 566
- GB-A- 1 206 235
- US-A- 2 885 168

## Beschreibung

Die Erfindung betrifft einen Rohrbügel mit einem radial ausgerichteten Befestigungssteg gemäß dem Oberbegriff des Anspruchs 1.

Ein solcher Rohrbügel ist aus der Schrift GB-A-1 206 235 bekannt.

Ein derartiger Rohrbügel dient zur Befestigung von Wellrohren, Stahlpanzerrohren, Weichstahlrohren, Kupferrohren und dergleichen auf einer Betonplatte. Die Befestigung erfolgt mittels einer Schraube oder einem anderen Spannstift, der durch einen Durchgang des Befestigungssteges hindurchtritt und in einen Einbohrdübel eingreift. Bei der Fertigstellung des Loches für den Einbohrdübel füllt sich dasselbe mehr oder weniger mit Bohrmehl, so daß das Einsetzen des Einbohrdübels in das Bohrloch große Schwierigkeiten bereitet und jedenfalls eine zeitaufwendige Arbeit ist.

Aufgabe der Erfindung ist die Bereitstellung eines Rohrbügels, der ohne Einbohrdübel befestigt werden kann.

Diese Aufgabe wird nach der Erfindung durch den Rohrbügel gemäß Anspruch 1 gelöst.

Der Zapfen wird unmittelbar in das Bohrloch eingeschlagen. Dabei ist es unerheblich, ob das Bohrloch mit Bohrmehl gefüllt ist, weil der Zapfen das Bohrmehl verdrängt.

Der Zapfen kann unmittelbar am Ende des Befestigungssteges abgebogen sein oder in einem mittleren Bereich des Befestigungssteges vorgesehen sein.

Der Zapfen ist in Querrichtung profiliert, damit er in Querrichtung nachgeben kann und mit Spannung an den Wänden des Bohrlochs anliegt.

Zur weiteren Sicherung des Zapfens innerhalb des Bohrlochs ist vorzugsweise vorgesehen, daß die Längskanten des Zapfens Widerhakenelemente aufweisen.

Der Durchmesser des Bohrbügels entspricht dem Durchmesser des jeweiligen Rohres.

Der Rohrbügel erstreckt sich vorzugsweise mindestens über einen Halbkreis, damit das Rohr sicher festgehalten ist. Damit der Rohrbügel sicher auf das Rohr aufgeklemmt werden kann, ist vorzugsweise eine Abbiegenase in radialer Richtung vorgesehen.

Damit sich der Rohrbügel an unterschiedliche Rohrdurchmesser anpassen kann, kann in der Mitte des Rohrbügels eine Sollbiegestelle vorgesehen sein. In einfacher Weise ist die Sollbiegestelle durch eine Lochung verwirklicht.

Ausführungsformen der Erfindung werden im folgenden unter Bezugnahme auf die anliegende Zeichnung erläutert, in der darstellen:
- Figur 1: eine Ansicht einer ersten Ausführungsform eines Rohrbügels,
- Figur 2: eine Unteransicht zu Figur 1,
- Figur 3: eine Ansicht einer weiteren Ausführungsform eines Rohrbügels,
- Figur 4: eine Unteransicht zu Figur 3 und
- Figur 5: die Anwendung eines Rohrbügels bei Rohren mit unterschiedlichem Durchmesser.

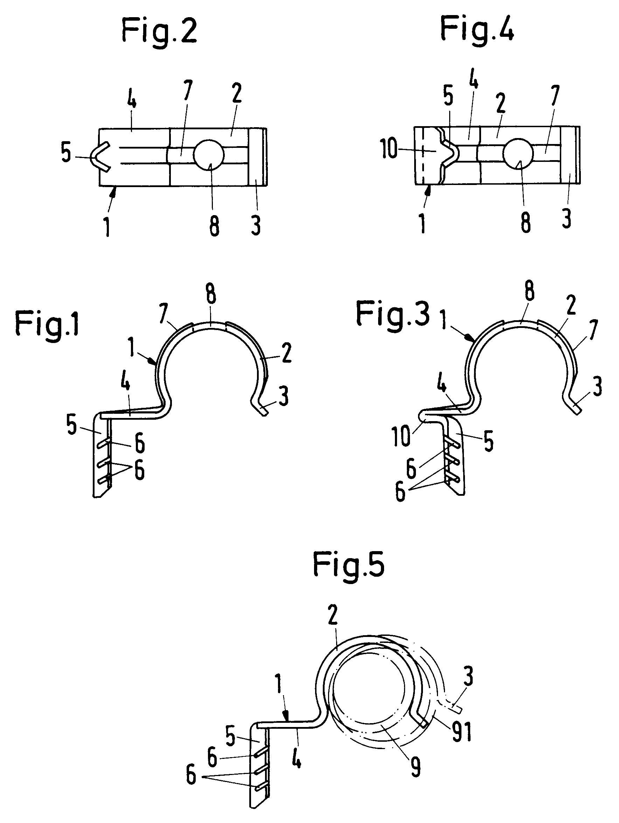

Der in Figur 1 dargestellte Rohrbügel ist ein Blechbiegeteil und besteht aus einem kreissegmentförmigen Bügel 2, der sich über mindestens einen Halbkreis erstreckt. An einem Ende des Bügels ist eine Abbiegenase in radialer Richtung angesetzt. Am anderen Ende des Bügels befindet sich ein Befestigungssteg, an dessen freiem Ende ein Zapfen 5 angeformt ist. Der Zapfen 5 hat ein V-förmiges Profil. An den Längskanten des Zapfens 5 sind Widerhakenelemente 6 vorgesehen.

Der Bügel 2 und der Befestigungssteg weisen eine Sicke 7 zur Verstärkung auf. Etwa im Scheitel des Bügels 2 befindet sich eine Lochung 8, so daß man dort eine Sollbiegestelle erhält. Der Verformungswiderstand des Bügels in diesem Bereich ist deutlich herabgesetzt.

Figur 5 zeigt die Anwendung eines Rohrbügels zur Befestigung eines Rohres 9 an einer Betondecke. In die Betondecke wird ein entsprechendes Loch eingebohrt. Der Bügel 2 wird über das Rohr 9 gedrückt und der Zapfen 5 in das Loch eingeschlagen. Dieses ist auch dann möglich, wenn das Loch ganz oder teilweise mit Bohrmehl gefüllt ist. Der Zapfen 5 findet in dem Loch einen sicheren Halt und legt dadurch das Rohr 9 fest. Hierdurch wird die Befestigung von Rohren 9 wesentlich erleichtert. Denn der Rohrbügel 1 kann unmittelbar in das Loch eingeschlagen werden, ohne daß ein Dübel eingesetzt werden muß. Die Montagearbeit kann infolgedessen verkürzt werden. Außerdem ergibt sich eine wesentliche Werkstoffersparnis, weil keine Einbohrdübel erforderlich sind.

Beim Aufsetzen des Rohrbügels 2 auf das Rohr 9 stellt die Abbiegenase eine sichere Führung für den Bügel 2 dar.

Der Rohrbügel kann auch für ein Rohr 91 mit größerem Durchmesser benutzt werden, wie man ebenfalls der Figur 5 entnimmt. Wenn das Rohr 91 einen größeren Durchmesser hat, so weitet sich der Bügel 2 um die durch die Lochung 8 verwirklichte Sollbiegestelle auf, so daß der Bügel 2 ein größeres Rohr umgreifen kann. Man kann somit einen Rohrbügel einer Größe für Rohre unterschiedlichen Durchmessers einsetzen.

Die Figur 3 und 4 zeigen eine abgewandelte Ausführungsform eines Rohrbügels. Der Befestigungssteg 4 hat eine Faltung 10 um 180°. Am Ende des ungefalteten Abschnitts ist der Zapfen 5 abgebogen. Mit dieser Anordnung erreicht man eine sichere Übertragung der Einschlagwirkung auf den Zapfen 5.

## Patentansprüche

1. Rohrbügel aus Blech mit einem radial angesetzten Befestigungssteg, an dem ein rechtwinklig abstehendes, in ein Bohrloch eines Bauteilesfestsetzbares Einschlagteil angeordnet ist, wobei das Einschlagteil einstückig am Befestigungssteg angeformt ist, **dadurch gekennzeichnet**, daß das Einschlagteil eine im Querschitt V-förmige, sich im Bohrloch verspannende Profilierung aufweist.

2. Rohrbügel nach Anspruch 1, **dadurch gekennzeichnet**, daß die Längskanten des Einschlagteiles (5) Widerhakenelemente (6) aufweisen.

3. Rohrbügel nach Anspruch 1, **dadurch gekennzeichnet**, daß der Befestigungssteg (4) eine Faltung (10) aufweist und daß das abgebogene Einschlagteil (5) gegenüber der Stirnseite des Befestigungssteges zurückgesetzt ist.

4. Rohrbügel nach Anspruch 1, **dadurch** **gekennzeichnet,** daß an dem dem Befestigungssteg (4) gegenüberliegenden Ende des Rohrbügels (1) eine Abbiegenase (3) in radialer Richtung vorgesehen ist.

5. Rohrbügel nach Anspruch 1, **dadurch gekennzeichnet**, daß etwa in der Mitte des Rohrbügels (1) eine Sollbiegestelle vorgesehen ist.

6. Rohrbügel nach Anspruch 5, **dadurch gekennzeichnet,** daß die Sollbiegestelle eine Lochung (8) aufweist.

## Claims

1. A pipe clamp of sheet metal having a radially attached fixing member on which there is arranged a driving-in member projecting at right angles which is arranged to be fixed in a hole drilled in a construction component, wherein the driving-in part is of integral construction with the fixing member, characterized in that the driving-in part has a V-shaped profiling in cross-section which becomes clamped in the drilled hole.

2. A pipe clamp according to claim 1, characterized in that the longitudinal edges of the driving-in part (5) have barb elements (6).

3. A pipe clamp according to claim 1, characterized in that the fixing member (4) has a fold (10) and the driving-in part (5) formed by bending is set back in relation to the end face of the fixing member.

4. A pipe clamp according to claim 1, characterized in that an angled member (3) projecting in the radial direction is provided at the end of the pipe clamp (1) opposite the fixing member (4).

5. A pipe clamp according to claim 1, characterized in that approximately in the middle of the pipe clamp (1) there is a predetermined bending point.

6. A pipe clamp according to claim 5, characterized in that the predetermined bending point comprises a perforation (8).

## Revendications

1. Bride de fixation en tôle pour tuyaux, présentant une membrure de fixation attenante dans le sens radial, et sur laquelle se trouve une pièce enfonçable par percussion qui fait saillie à angle droit et peut être consignée à demeure dans un trou d'une partie structurelle, la pièce enfonçable par percussion étant ménagée solidairement d'un seul bloc sur la membrure de fixation, bride caractérisée par le fait que la pièce enfonçable par percussion comporte un profilage de section transversale configurée en V, qui se bloque dans le trou.

2. Bride de fixation pour tuyaux, selon la revendication 1, caractérisée par le fait que les bords longitudinaux de la pièce (5) enfonçable par percussion présentent des éléments (6) du type ardillons.

3. Bride de fixation pour tuyaux, selon la revendicacation 1, caractérisée par le fait que la membrure de fixation (4) présente un repli (10) ; et par le fait que la pièce coudée (5) enfonçable par percussion est en retrait par rapport à la face extrême de la membrure de fixation.

4. Bride de fixation pour tuyaux, selon la revendication 1, caractérisée par le fait qu'un bec coudé (3) est prévu, dans le sens radial, à l'extrémité de la bride de fixation (1) qui est tournée à l'opposé de la membrure de fixation (4).

5. Bride de fixation pour tuyaux, selon la revendication 1, caractérisée par le fait qu'une zone de flexion programmée est prévue approximativement au centre de la bride de fixation (1).

6. Bride de fixation pour tuyaux, selon la revendication 5, caractérisée par le fait que la zone de flexion programmée est percée d'une perforation (8).
